# EUROPEAN PATENT SPECIFICATION

(11) **EP 3 434 093 B1**
(45) Date of publication and mention of the grant of the patent: **27.11.2019**
(21) Application number: 17306015.3
(22) Date of filing: 28.07.2017
(51) Int. Cl.: A01D 34/416

(54) **CUTTING FILAMENT FOR A VEGETATION CUTTING MACHINE**
SCHNEIDFILAMENT FÜR EINE VEGETATIONSSCHNEIDEMASCHINE
FILAMENT DE DÉCOUPE POUR MACHINE DE DÉCOUPE DE VÉGÉTATION

(43) Date of publication of application: 30.01.2019
(73) Proprietor: Speed France S.A.S., 69400 Arnas (FR)
(72) Inventor: BELJEAN, Yann, 69870 La Mure sur Azergues (FR)
(74) Representative: Regimbeau

(56) References cited:
- EP-A1- 1 683 406
- WO-A1-93/18891
- WO-A1-2015/195956
- FR-A1- 2 108 111

## Description

### FIELD OF THE INVENTION

The invention relates to a cutting filament for a vegetation cutting machine, such as a brush cutter or an edge trimmer, and a process for manufacturing such a cutting filament.

### BACKGROUND OF THE INVENTION

Cutting filaments for vegetation cutting machines are generally made of a polymeric material such as polyamide.

In order to strengthen the filament, to increase its abrasion and impact resistance, it may be desirable to add a fiber load to the polymeric material.

Document EP1683406 discloses a cutting filament according to the preamble of claim 1.

In plastics industry, glass fibers are frequently used as a load to reinforce polymeric parts.

To date, polyamide grades suitable for extrusion with a fiber load do not exist.

Thus, in order to manufacture a fiber reinforced filament, an extruder is fed with raw compound materials (plastic granulate or powder, fiber load, and any required additive), that are together introduced into the barrel of the extruder, where they are heated and caused to flow through an extrusion screw so as to melt the plastic compounds and distribute the fiber load within the melt. Then, the molten material enters a die that defines the cross section of the filament.

Due to mechanical strain exerted by the extrusion screw, the fibers are damaged and broken into small pieces.

As a result, in the filament exiting from the extruder, the fibers generally have a length ranging from 0.3 to 0.5 mm.

In order to provide a sufficient mechanical strength, the amount of such fibers has to be substantially high, typically ranging from 15 to 30%, e.g. about 20%.

However, an adverse effect of the fibers is a reduction of the flexibility of the filament, which results in an increased risk of breakage, in particular at the level of the eyelet, which is the orifice from which the filament exits from the cutting head of the vegetation cutting machine. Indeed, in case of an impact with an obstacle, the portion of the filament extending from the eyelet and the free end of the filament may be caused to strongly bend, in such a way that a breakage occurs in the vicinity of the eyelet.

In such case, the user has to take out a new portion of the filament, which may require stopping or at least decelerating the vegetation cutting machine.

Such frequent interruptions of the vegetation cutting operation are not suitable, especially in professional use, when large surfaces have to be cut.

### SUMMARY OF THE INVENTION

A goal of the invention is thus to remedy to the above problems and design a cutting filament with an increased abrasion resistance without impairing the flexibility of the filament.

To that end, an object of the invention is to define a cutting filament for a vegetation cutting machine, such as a brush cutter or an edge trimmer, comprising a polymer matrix and a fiber load distributed within the matrix, characterized in that:
- the polymer matrix comprises polyamide 6, copolyamide 6/66 and caprolactam, and
- the fiber load comprises fibers having a length ranging from 4 to 6 mm.

According to an embodiment, the fibers are selected from glass fibers, carbon fibers, aramid fibers and linen fibers.

Advantageously, the fibers are oriented longitudinally.

The fiber load preferably represents from 7% to 14% of the weight of the filament. According to an embodiment, the polymer matrix comprises:
- an amount of polyamide 6 ranging from 35 to 50% by weight of the polymer matrix,
- an amount of copolyamide 6/66 ranging from 35 to 50% by weight of the polymer matrix,
- an amount of caprolactam ranging from 5 to 30% by weight of the polymer matrix.

According to a preferred embodiment, the amount of polyamide 6 is 43% by weight of the polymer matrix, the amount of copolyamide 6/66 is 43% by weight of the polymer matrix, and the amount of caprolactam is 14% by weight of the polymer matrix.

The cross section of the filament typically has an area equal to the area of a circle having a diameter ranging from 1.3 to 2.4 mm.

Another object of the invention is a process for manufacturing such a cutting filament, comprising extruding the melted polymer matrix and the fiber load together through an extrusion die of an extruder.

Another object is a cutting assembly comprising a vegetation cutting machine including a cutting head and a cutting filament as described above in the cutting head.

The vegetation cutting machine may advantageously be powered by a battery.

Another object of the invention is a process for cutting vegetation, characterized in that it is implemented with such a cutting assembly.

### DETAILED DESCRIPTION OF EMBODIMENTS OF THE INVENTION

The invention provides a filament reinforced with longer fibers than in the prior art, said fiber load being distributed within an adapted polymer matrix.

More precisely, the fibers have a length comprised between 4 and 6 mm. It to be noted that, due to the manufacturing process of the fibers or of the extrusion process of the filament, a small amount of fibers may have a length smaller than 4 mm or greater than 6 mm. However, more than 80% of the fibers have a length ranging from 4 to 6 mm.

The fibers may be selected from glass fibers, carbon fibers, aramid fibers and natural fibers, such as linen fibers.

The diameter of the fibers is typically comprised between 10 and 50 µm.

As compared with the short fibers used in the prior art, a smaller amount of long fibers as used in the present invention can increase the abrasion resistance of the filament, while also increasing the flexibility of the filament.

This advantage can be explained by the fact that the fibers have a length that is of the order of the length of the polymer chains forming the filament, and that, due to the extrusion process, the fibers are oriented substantially longitudinally, in the same direction as the polymer chains.

The long fibers also improve the cutting efficiency of the filament since they have themselves cutting and abrasive properties.

Besides, since the long fibers have an intrinsic greater abrasion resistance, they can be used in a smaller amount than short fibers.

In particular, the amount of fiber load should be comprised between 7 and 14%, preferably about 10%, of the weight of the filament. Indeed, the applicant has determined that with a fiber amount of less than 7%, the mechanical strength of the filament is not significantly improved. On the other end, with a fiber amount of more than 14% of the weight of the filament, the filament becomes too stiff, which does not allow reducing the risk of breakage at the eyelet.

Besides, the composition of the polymer matrix of the filament has been defined so as to increase the flexibility of the filament.

To that end, the polymer matrix of the filament comprises a mixture of polyamide 6, copolyamide 6/66 and caprolactam. It should be noted that the composition may also comprise any required additive, dye, etc.

Polyamide 6 provides impact and abrasion resistance to the filament.

Caprolactam is a monomer of polyamide 6, which is compatible with polyamide 6 (no compatibilization agent is required to stabilize the mixture). Since caprolactam is a short molecule, it allows increasing the flexibility of the filament as compared to a filament made of polyamide 6. Usually, in non-reinforced filaments, the amount of caprolactam is kept below 10% by weight of the polymer matrix in order not to deteriorate the mechanical properties of the filament. However, since the filament according to the invention is reinforced with long fibers, a greater amount of caprolactam may be acceptable.

Similarly, a copolyamide 6/66, which is a copolymer of polyamide 6 and polyamide 66, has shorter polymeric chains than polyamide 6 and thus also contributes to the increased flexibility of the filament - to a smaller extent than caprolactam, however, since its polymeric chains are longer than caprolactam. Usually, in non-reinforced filaments, the amount of copolyamide 6/66 is kept below 30% by weight of the polymer matrix in order not to deteriorate the mechanical properties of the filament. However, since the filament according to the invention is reinforced with long fibers, a greater amount of copolyamide 6/66 may be acceptable.

Advantageously, the polymer matrix may comprise: from 35 to 50% of polyamide 6, from 35 to 50% of copolyamide 6/66, and from 5 to 30% of caprolactam (the amounts are relative to the weight of the polymer matrix, not including the fiber load).

According to a preferred embodiment, the polymer matrix may consist of: 43% of polyamide 6, 43% of copolyamide 6/66 and 14% of caprolactam relative to the weight of the polymer matrix.

The filament may have a circular cross section or any other suitable cross section, such as a polygonal cross section.

The cross section of the filament typically has an area equal to the area of a circle having a diameter ranging from 1.3 to 2.4 mm.

The filament is manufactured by extrusion in an extruder. Conventionally, the extruder comprises a hopper through which the extruder is fed with the raw compound materials, a heated barrel including an extrusion screw, and an extrusion head comprising a die defining the cross section of the filament.

The raw compound materials of the matrix are introduced in the hopper.

According to an embodiment, the fiber load is also introduced in the hopper, i.e. upstream from the extrusion screw. To that end, the profile of the screw may be adjusted so as to avoid breaking the fibers when passing through the screw, thus ensuring that the length of the fibers in the filament exiting from the die is comprised between 4 and 6 mm.

According to another embodiment, the fiber load is introduced in the melted polymer matrix in the extrusion head, downstream from the extrusion screw.

To cut vegetation, the cutting filament is arranged in the cutting head of a vegetation cutting machine, such as a brush cutter or edge trimmer. As explained in more detail below, the cutting filament is particularly advantageous for use with a battery-powered vegetation cutting machine.

### Experimental results

### Mechanical behavior

The mechanical behavior of the filament has been assessed by injection molding first studs with the above-described preferred polymer matrix composition (i.e. 43% of polyamide 6, 43% of copolyamide 6/66 and 14% of caprolactam relative to the weight of the polymer matrix) comprising long glass fibers (5 mm), and second studs with the same size and shape and the same polymer matrix composition as the first studs but including short glass fibers (0.3-0.4 mm). In both cases, the weight amount of the fiber load was 10% of the weight of the studs.

The first and second studs have been subjected to tensile modulus measurements at 120°C and Charpy tests at -30°C.

The results are presented in the table below.

| **Stud reinforcement** | **Tensile modulus at 120°C** | **Charpy Notched Impact Strength at -30°C** |
|---|---|---|
| Short fibers (0.3-0.4 mm) | 7.355 MPa | 14 kJ/m² |
| Long fibers (5 mm) | 7.355 MPa | 28 kJ/m² |

The tensile modulus is identical with both types of fibers.

However, the impact strength is twice higher with the long fibers than with the short fibers. Since this strength indicates the ability of a material to absorb energy, the results show that a filament with long fibers will be less affected by an impact than a filament with short fibers.

### Cutting efficiency

Besides, the cutting efficiency of the filament has been assessed as follows.

Several filaments having the same diameter (2 mm) have been manufactured by extrusion. A first type of filament did not comprise any fiber load; a second type of filament was reinforced with short fibers (0.3-0.4 mm) and a third type of filament was reinforced with long fibres (5 mm). In the last two cases, the weight amount of the fiber load was 10% of the weight of the filament. For the first type of filament, the matrix composition was: 63% of polyamide 6, 27% of copolyamide 6/66 and 10% of caprolactam (relative to the weight of the matrix), which is a conventional composition for non-reinforced filaments; the second and third types of filaments had the same matrix composition: 43% of polyamide 6, 43% of copolyamide 6/66 and 14% of caprolactam relative to the weight of the polymer matrix.

A brush cutter has been fed successively with a 5 m long filament of each of the above three types, and operated to cut tall green grass until the whole filament has been used. The grass was 20 cm high and was slightly humid.

The cut surface that was achieved by each filament was measured. The results are shown in the table below. The surface achieved with the first type of filament is normalized to a basis equal to 100, and the surfaces achieved with the second and third filaments are given relative to this basis.

| **Filament** | **Surface cut with a 5 m filament (no unit)** |
|---|---|
| Without fiber load | 100 |
| With short fibers | +30% |
| With long fibers | +70% |

The above table clearly shows that a cutting filament with long fibers has a much greater cutting efficiency than the two other types of filaments. Indeed, such a cutting filament is able to cut a surface that is 70% greater than the surface achieved by a filament without any fiber load.

On the other hand, for a same surface to be cut, the time required is reduced by respective similar amounts for a filament with long fibers as compared to a filament without any fiber load and a filament with short fibers. This is particularly advantageous for battery-powered batteries, whose autonomy is limited.

## Claims

1. Cutting filament for a vegetation cutting machine, such as a brush cutter or an edge trimmer, comprising a polymer matrix and a fiber load distributed within the matrix, **characterized in that**:
- the polymer matrix comprises polyamide 6, copolyamide 6/66 and caprolactam, and
- the fiber load comprises fibers having a length ranging from 4 to 6 mm.

2. Cutting filament according to claim 1, wherein the fibers are selected from glass fibers, carbon fibers, aramid fibers and linen fibers.

3. Cutting filament according to claim 1 or claim 2, wherein the fibers are oriented longitudinally.

4. Cutting filament according to one of claims 1 to 3, wherein the fiber load represents from 7% to 14% of the weight of the filament.

5. Cutting filament according to one of claims 1 to 4, wherein the polymer matrix comprises:
- an amount of polyamide 6 ranging from 35 to 50% by weight of the polymer matrix,
- an amount of copolyamide 6/66 ranging from 35 to 50% by weight of the polymer matrix,
- an amount of caprolactam ranging from 5 to 30% by weight of the polymer matrix.

6. Cutting filament according to claim 5, wherein the amount of polyamide 6 is 43% by weight of the polymer matrix, the amount of copolyamide 6/66 is 43% by weight of the polymer matrix, and the amount of caprolactam is 14% by weight of the polymer matrix.

7. Cutting filament according to one of claims 1 to 6, wherein the cross section of the filament has an area equal to the area of a circle having a diameter ranging from 1.3 to 2.4 mm.

8. Process for manufacturing a cutting filament according to one of claims 1 to 7, comprising extruding the melted polymer matrix and the fiber load together through an extrusion die of an extruder.

9. Cutting assembly comprising a vegetation cutting machine including a cutting head and a cutting filament according to one of claims 1 to 7 in the cutting head.

10. Cutting assembly according to claim 9, wherein the vegetation cutting machine is powered by a battery.

11. Process for cutting vegetation, **characterized in that** it is implemented with a cutting assembly according to claim 9 or claim 10.

## Patentansprüche

1. Schneidfaden für eine Pflanzenschneidmaschine, wie etwa einen Gestrüppschneider oder einen Kantentrimmer, der eine Polymermatrix und eine innerhalb der Matrix verteilte Faserladung umfasst, **dadurch gekennzeichnet, dass**:
- die Polymermatrix Polyamid 6, Copolyamid 6/66 und Caprolactam umfasst, und
- die Faserladung Fasern umfasst, die eine Länge im Bereich von 4 bis 6 mm aufweisen.

2. Schneidfaden nach Anspruch 1, wobei die Fasern ausgewählt sind aus Glasfasern, Kohlenstofffasern, Aramidfasern und Leinenfasern.

3. Schneidfaden nach Anspruch 1 oder Anspruch 2, wobei die Fasern längs ausgerichtet sind.

4. Schneidfaden nach einem der Ansprüche 1 bis 3, wobei die Faserladung 7 % bis 14 % des Gewichts des Fadens ausmacht.

5. Schneidfaden nach einem der Ansprüche 1 bis 4, wobei die Polymermatrix umfasst:
- eine Menge an Polyamid 6 im Bereich von 35 bis 50 Gewichts-% der Polymermatrix,
- eine Menge an Copolyamid 6/66 im Bereich von 35 bis 50 Gewichts-% der Polymermatrix,
- eine Menge an Caprolactam im Bereich von 5 bis 30 Gewichts-% der Polymermatrix.

6. Schneidfaden nach Anspruch 5, wobei die Menge an Polyamid 6 43 Gewichts-% der Polymermatrix beträgt, die Menge an Copolyamid 6/66 43 Gewichts-% der Polymermatrix beträgt, und die Menge an Caprolactam 14 Gewichts-% der Polymermatrix beträgt.

7. Schneidfaden nach einem der Ansprüche 1 bis 6, wobei der Querschnitt des Fadens eine Fläche aufweist, die gleich der Fläche eines Kreises ist, welcher einen Durchmesser im Bereich von 1,3 bis 2,4 mm aufweist.

8. Verfahren zur Herstellung eines Schneidfadens nach einem der Ansprüche 1 bis 7, das das Extrudieren der geschmolzenen Polymermatrix und der Faserladung zusammen durch eine Extrusionsdüse eines Extruders umfasst.

9. Schneidvorrichtung, die eine Pflanzenschneidmaschine umfasst, welche einen Schneidkopf und einen Schneidfaden nach einem der Ansprüche 1 bis 7 im Schneidkopf einschließt.

10. Schneidvorrichtung nach Anspruch 9, wobei die Pflanzenschneidmaschine mit einer Batterie betrieben wird.

11. Verfahren zum Schneiden von Pflanzen, **dadurch gekennzeichnet, dass** es mit einer Schneidvorrichtung nach Anspruch 9 oder Anspruch 10 durchgeführt wird.

## Revendications

1. Filament de coupe pour une machine de coupe de végétation, telle qu'une débroussailleuse ou un coupe-bordures, comprenant une matrice en polymère et une charge en fibres distribuée au sein de la matrice, **caractérisé en ce que** :
- la matrice en polymère comprend du polyamide 6, du copolyamide 6/66 et du caprolactame, et
- la charge en fibres comprend des fibres ayant une longueur allant de 4 à 6 mm.

2. Filament de coupe selon la revendication 1, dans lequel les fibres sont sélectionnées parmi les fibres de verre, les fibres de carbone, les fibres d'aramide et les fibres de lin.

3. Filament de coupe selon la revendication 1 ou la revendication 2, dans lequel les fibres sont orientées de façon longitudinale.

4. Filament de coupe selon l'une des revendications 1 à 3, dans lequel la charge en fibres représente de 7 % à 14 % du poids du filament.

5. Filament de coupe selon l'une des revendications 1 à 4, dans lequel la matrice en polymère comprend :
- une quantité de polyamide 6 allant de 35 à 50 % en poids de la matrice en polymère,
- une quantité de copolyamide 6/66 allant de 35 à 50 % en poids de la matrice en polymère,
- une quantité de caprolactame allant de 5 à 30 % en poids de la matrice en polymère.

6. Filament de coupe selon la revendication 5, dans lequel la quantité de polyamide 6 est de 43 % en poids de la matrice en polymère, la quantité de copolyamide 6/66 est de 43 % en poids de la matrice en polymère, et la quantité de caprolactame est de 14 % en poids de la matrice en polymère.

7. Filament de coupe selon l'une des revendications 1 à 6, dans lequel la section transversale du filament a une aire égale à l'aire d'un cercle ayant un diamètre allant de 1,3 à 2,4 mm.

8. Procédé de fabrication d'un filament de coupe selon l'une des revendications 1 à 7, comprenant l'extrusion de la matrice en polymère fondue et de la charge en fibres ensemble par le biais d'une filière d'extrusion d'une extrudeuse.

9. Ensemble de coupe comprenant une machine de coupe de végétation incluant une tête de coupe et un filament de coupe selon l'une des revendications 1 à 7 dans la tête de coupe.

10. Ensemble de coupe selon la revendication 9, dans lequel la machine de coupe de végétation est alimentée par une batterie.

11. Procédé de coupe de végétation, **caractérisé en ce qu'**il est mis en œuvre avec un ensemble de coupe selon la revendication 9 ou la revendication 10.
